# EUROPEAN PATENT APPLICATION

(11) **EP 4 290 509 A1**
(43) Date of publication of application: **13.12.2023**
(21) Application number: 22177587.7
(22) Date of filing: 07.06.2022
(51) Int. Cl.: G10L 15/01, G06F 40/51

(54) **COMPUTER IMPLEMENTED METHOD FOR EVALUATING ONE OR MORE SPEECH RECOGNITION SYSTEMS**

(71) Applicant: Interprefy AG, 8008 Zurich (CH)
(72) Inventor: DAVYDOV, Alexander, 8700 Küsnacht (CH)
(74) Representative: Marks & Clerk LLP

(57) **Abstract**

Described herein is a computer implemented method for evaluating one or more speech recognition systems (e.g. machine translation and/or automatic speech recognition systems). The method comprises: receiving one or more evaluation criteria; retrieving an evaluation set corresponding to the evaluation criteria from a repository of test samples each comprising audio in a source language. The evaluation set comprises an evaluation test sample from the one or more test samples. The method comprises providing the evaluation test sample to one or more speech recognition systems and receiving a result comprising text in the target language for the evaluation test sample corresponding to the audio of the evaluation test sample. The method may comprise obtaining an accuracy metric and/or a latency value for each result, which may be output as part of an evaluation metric.

## Description

### FIELD OF INVENTION

The present invention relates to a computer implemented method for evaluating one or more speech recognition systems, in particular automatic speech recognition (ASR) systems and/or machine translation systems.

### BACKGROUND

Benchmarking of speech recognition systems, such as automatic speech recognition (ASR) systems and/or machine translation systems, is useful for assessing the performance of such systems. However, benchmarking tests are traditionally performed on an ad-hoc basis with test data purposed only for a specific benchmarking measurement, resulting in limited flexibility.

### SUMMARY

There is therefore a need for an improved way of benchmarking speech recognition systems, such as automatic speech recognition (ASR) systems and/or machine translation systems.

The present invention provides a computer implemented method of evaluating one or more speech recognition systems that is repeatable, adaptable, and that and can be applied to any speech recognition system. An evaluation test (also referred to herein as a benchmarking test) can be set up using an arbitrary number of audio samples selected from an arbitrarily large sample repository according to criteria provided by a user. For example, the audio samples may be stored with associated metadata providing detailed information about the samples, such as language, dialect, accent, etc., and the evaluation may be performed for one or more speech recognition systems using the samples selected according to the criteria. The parameters for a particular benchmarking test can be stored to memory and retrieved for running at a later time on the same or a different set of speech recognition systems. For example, a test could be repeated at regular intervals to monitor the performance of one or more speech recognition systems over time.

Described herein is a computer implemented method for evaluating one or more speech recognition systems. The computer implemented method comprises receiving one or more evaluation criteria and retrieving, from a sample repository, an evaluation set corresponding to the evaluation criteria, wherein the sample repository comprises: one or more test samples, each test sample comprising audio in a source language; and the sample repository may further comprise a reference text for each test sample, the reference text being in a target language and corresponding to the audio of the respective test sample. The evaluation set comprises an evaluation test sample from the one or more test samples. The computer implemented method further comprises providing the evaluation test sample to one or more speech recognition systems, and receiving, from each speech recognition system, a result comprising text in the target language for the evaluation test sample, the result corresponding to the audio of the evaluation test sample.

It will be understood that, in the case of ASR, the source and target languages are generally the same, while in the case of machine translation the source and target languages are generally different. In general, the test samples comprise recordings of spoken word.

It will be understood that, in the case of ASR, the reference text generally comprises a transcript of the audio of the respective test sample (which may be referred to as a ground truth transcript). It will be further understood that, in the case of machine translation, the reference text generally comprises a human translation in the target language, corresponding to the audio of the respective test sample in the source language.

The computer implemented method may comprise obtaining an accuracy metric for each result, wherein each accuracy metric is indicative of an accuracy of the result relative to the reference text associated with the evaluation test sample.

The computer implemented method may comprise obtaining a latency value associated with each result.

The computer implemented method may comprise outputting an evaluation metric for each speech recognition system. Each evaluation metric may comprise the accuracy metric for the result received from the speech recognition system, and/or each evaluation metric may comprise the latency value associated with the result received from the speech recognition system.

An evaluation metric may be used to provide a ranking of the speech recognition systems to which the computer implemented method is applied. For example, the speech recognition systems could be ranked according to accuracy, latency, or a combination of these.

The evaluation metric may be used to inform a decision on which speech recognition system, out of a plurality of speech recognition systems, to employ for a particular application. For example, the highest ranked speech recognition system may be employed. In some examples, the most accurate speech recognition system (according to the accuracy metric) may be employed. In some examples, the speech recognition system having the lowest latency (according to the latency value) may be employed. In some examples, accuracy and latency may be considered together to determine which speech recognition system to employ.

Advantageously, the sample repository can comprise an arbitrarily large number of audio samples, and the evaluation set (which is a subset of the test samples in the sample repository) can therefore also be arbitrarily large (i.e. comprise an arbitrary number of audio samples as evaluation test samples). In other words, a desired evaluation set comprising an arbitrary number of evaluation test samples can more easily be produced based on a simple set of specified evaluation criteria, rather than produced from scratch by preparing dedicated test samples for a particular test.

As an example, each test sample in the sample repository may have associated metadata detailing any number of aspects describing the sample, such as language, dialect, speaker properties (e.g. sex, age category, native language), duration, rate of speech, type of speech, and/or number of speakers. Evaluation criteria may be received (e.g. input by a user via a user interface) in a form that corresponds to one or more aspects of the metadata, and the evaluation set may therefore comprise test samples having one or more aspects of the metadata that matches the evaluation criteria.

Further advantageously, the parameters of a particular evaluation test (e.g. evaluation sample set and/or evaluation criteria, the speech recognition systems to which the test is applied, etc.) can be stored (e.g. in memory) and retrieved at a later time, such that the evaluation test can be repeated (in some examples, with some modifications to the parameters), for example to enable dynamic monitoring of the evaluation metric(s) to monitor changes in the relative performances of the speech recognition systems over time. The evaluation criteria, provided for an initial test, can easily be modified as desired between tests, e.g. via a same user interface as is used to provide the evaluation criteria for the initial test. Furthermore, new speech recognition systems can easily be added to an existing test for subsequent runs of the test, so that they can be immediately compared to the systems to which the test has already been applied.

The computer implemented method according to the present disclosure may also enable continual monitoring of the performances of one or more speech recognition systems over time. For example, a test could be set up according to a particular set of evaluation parameters, for application to a particular set of speech recognition systems, and the test could be set to run automatically, e.g. at regular time intervals. A user may receive a notification of the results of the test (e.g. the accuracy metric(s), latency value(s), evaluation metric(s), ranking(s)) once each test has been run. In some cases, the user may only be notified if there is a change in the results of the test relative to a previously run test. In examples, the user may receive a notification via a user interface, and/or via a notification system such as email.

While the computer implemented method described herein may be applied to any system (including an off-line, or batch-processing system), the computer implemented method described herein is particularly useful for evaluating, or benchmarking, real-time, or live, ASR and/or machine translation systems. In particular, the provision of a latency value according to the present disclosure is useful for simplified and adaptable evaluating real-time and/or live ASR and/or machine translation systems.

In some examples, the computer implemented method described herein can comprise receiving a requested latency, and obtaining a difference between the requested latency and the obtained latency. The computer implemented method may further comprise outputting the difference between the requested latency and the obtained latency.

The computer implemented method may further comprise selecting a speech recognition system based on the evaluation metric. For example, the speech recognition systems may be ranked according to their associated evaluation metrics, and the highest ranked speech recognition system may be selected for a particular application. In some examples, the computer implemented method may further comprise using the selected speech recognition system for a speech recognition task (e.g. an ASR task and/or a machine translation task).

In some examples, receiving the evaluation criteria comprises receiving evaluation criteria via a user interface. For example, a user interface may comprise a graphical user interface (GUI), and/or a text-based user interface.

In some examples, receiving the evaluation criteria comprises transmitting the evaluation criteria to a memory (e.g. for storage in the memory). Transmitting the evaluation criteria to a memory advantageously enables the retrieval of the evaluation criteria from the memory for subsequent tests, allowing the same test to be run again, or to be modified (i.e. by modifying the evaluation criteria) prior to running the test again.

In some examples, receiving the evaluation criteria comprises retrieving the evaluation criteria from memory. Retrieving the evaluation criteria from memory advantageously ensures that a test can be repeated under the same conditions as a previous test, with no, or minimal, input from a user.

In some examples, the computer implemented method further comprises receiving, via a user interface, a modification to the evaluation criteria retrieved from the memory. A previously run test can therefore advantageously be run again with modifications to the evaluation criteria, without the requirement for a user to recall and provide all of the evaluation criteria again.

In some examples, outputting the evaluation metric comprises transmitting the evaluation metric to a user interface. Transmitting the evaluation metric to a user interface may advantageously enable instant notification to a user of the results of the test.

In some examples, outputting the evaluation metric comprises transmitting the evaluation metric to a database. Transmitting the evaluation metric to a database advantageously enables the recording of evaluation metrics output by sequential runs of a particular test, for example such that the metrics can be retrieved as required, and compared with the outputs of previous runs of a test.

In some examples, outputting the evaluation metric comprises transmitting the evaluation metric to a notification system. An example of a notification system includes an email server. Outputting the evaluation metric may comprise sending an email to a user, the email containing details of the evaluation metric. Transmitting the evaluation metric to a notification system facilitates the automated, or pre-programmed, running of tests without further user input. The user is simply notified of the results of the test once the test has taken place. In some examples, the user may only be notified of the results of the test(s) if the results represent a change in comparison to previous one or more previously run tests.

The computer implemented method may further comprise comparing the evaluation metric to a previously obtained evaluation metric, and outputting a result of the comparison. For example, the result of the comparison could be transmitted to a user interface, and/or to a notification system. Outputting the result of the comparison further advantageously facilitates instantaneous monitoring of the changes in the relative performances of the speech recognition systems over time.

It will be appreciated that the computer implemented methods described herein may be equally applied to text-to-text machine translation systems instead of, or as well as, speech recognition systems, where it will be understood that the test samples may instead (or additionally) comprise text in a source language. It will be further understood that, in the case of text-to-text machine translation, the reference text for each test sample may correspond to the text of the respective test sample, and the result received from each machine translation system may correspond to the text of the evaluation test sample.

Also described herein is a device comprising a processor, the processor configured to carry out any of the computer implemented methods described herein.

For example, the device could be a personal computer or laptop, a server, or a mobile phone, tablet, or other portable communications device.

The device may further comprise a display (e.g. a screen) and outputting the evaluation metric may comprise transmitting the evaluation metric to the display.

Also described herein is a non-transitory computer readable medium comprising instructions which, when executed by a processor of a computing device, cause the computing device to carry out any of the computer implemented methods described herein.

The instructions may be provided on one or more carriers. For example there may be one or more non-transient memories, e.g. a EEPROM (e.g. a flash memory) a disk, CD-or DVD-ROM, programmed memory such as read-only memory (e.g. for Firmware), one or more transient memories (e.g. RAM), and/or a data carrier(s) such as an optical or electrical signal carrier. The memory/memories may be integrated into a corresponding processing chip and/or separate to the chip. Code (and/or data) to implement embodiments of the present disclosure may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language.

Further described herein is a computer program comprising instructions which, when the program is executed by a computer, cause the computer to carry out any of the computer implemented methods described herein.

These and other aspects will be apparent from the embodiments described in the following. The scope of the present disclosure is not intended to be limited by this summary nor to implementations that necessarily solve any or all of the disadvantages noted.

### BRIEF DESCRIPTION OF THE PREFERRED EMBODIMENTS

Some embodiments of the disclosure will now be described by way of example only and with reference to the accompanying figures, in which:
Figure 1 schematically illustrates an example system for carrying out the computer implemented method of the present disclosure;
Figure 2 schematically illustrates an example of a device which may be used to provide evaluation criteria; and
Figure 3 illustrates an example of a method for evaluating one or more speech recognition systems according to the present disclosure.

### DETAILED DESCRIPTION OF THE PREFERRED EMBODIMENTS

Embodiments will now be described by way of example only with reference to the accompanying figures.

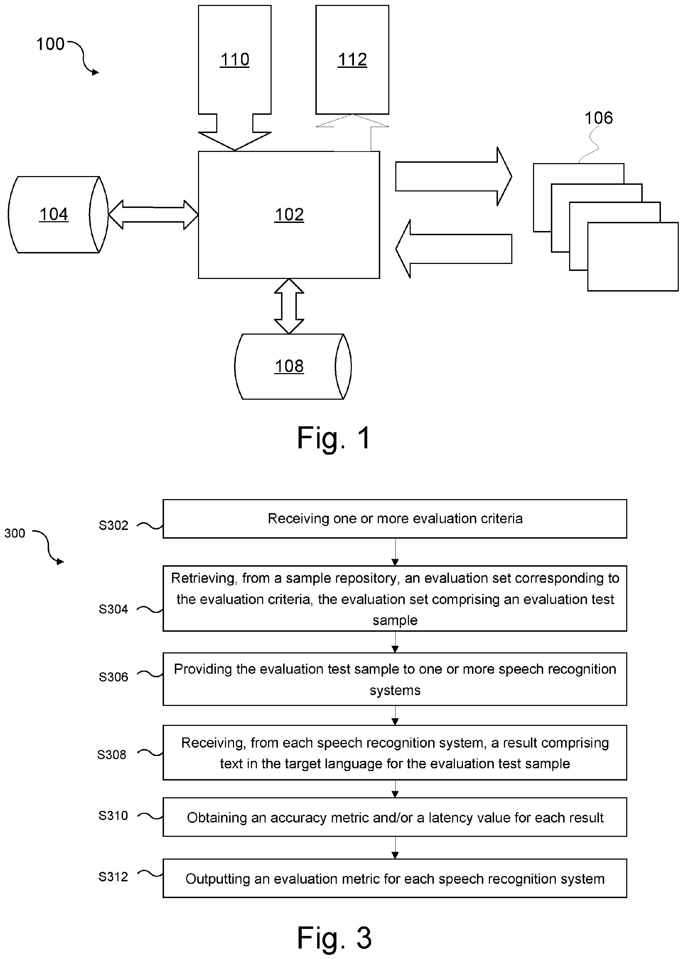

Figure 1 schematically illustrates an example system 100 for carrying out the computer implemented method of the present disclosure. The system 100 comprises a computing device 102, such as the central processing unit (CPU) of a computer, configured to carry out the computer implemented method described herein.

The system 100 further comprises one or more storage devices 104, 108, or repositories, to which data can be written, and/or from which data can be retrieved by the computing device 102.

A storage device 104 includes a sample repository, on which are stored an arbitrary number of test samples. Each test sample comprises audio in a source language, i.e. an audio recording including one or more spoken words or phrases in a particular language. Each test sample has associated with it information describing various properties of the sample, for example as metadata stored in a database and associated with each test sample stored on the storage device 104. The information may include the language and/or dialect of the test sample, properties of the recorded speaker (e.g. sex, age or age category, native language, etc.), the duration of the test sample, the rate of speech, the type of speech, and/or the number of speakers, etc. Each test sample further has associated with it one or more reference texts in one or more target languages. For example, in the case of automatic speech recognition (ASR), where the source and target languages are generally the same, the reference text is generally a human-prepared transcript of the test sample (i.e. a ground truth transcript). In the case of machine translation, the source and target languages are generally different, and the reference text is generally a human translation of the contents of the test sample into a target language. There may any number of reference texts for a particular test sample. In particular, there may be any number of reference texts corresponding to human translations of each test sample into any number of target languages. The reference texts are generally stored on the storage device 104 and associated with the relevant test sample(s), e.g. in a database.

The computing device 102 receives one or more evaluation criteria 110. The evaluation criteria 110 may be provided by a user via a user interface, such as a graphical user interface (GUI) and/or a text-based interface. In some examples, the evaluation criteria 110 may be retrieved from memory, such as a storage device. The evaluation criteria 110 correspond to the any of the properties of the sample (e.g. stored as metadata) described above. For example, the evaluation criteria 110 could specify test samples featuring female voices speaking in Australian English. The computing device 102 retrieves, from the sample repository on the storage device 104, all test samples matching the evaluation criteria 110. Following the example above, all of the test samples featuring female voices speaking in Australian English would be retrieved.

The retrieved test samples collectively form an evaluation test set (i.e. a subset of the test samples in the repository, selected according to the evaluation criteria). Each test sample in the evaluation test set is referred to as an evaluation test sample.

The computing device 102 provides the evaluation test set to one or more speech recognition systems 106. The speech recognition systems 106 may comprise ASR systems or machine translation systems. The evaluation test set is provided to each speech recognition system 106 as an input. The computing device 102 then receives a result from each speech recognition system 106, where the result comprises a machine translated text corresponding to each evaluation test sample in the evaluation set when the speech recognition systems 106 are machine translation systems, and where the result comprises text (e.g. a machine generated transcript) of each evaluation test sample in the evaluation set when the speech recognition systems 106 are ASR systems.

The computing device 102 may obtain an accuracy metric for each result. The accuracy metric represents a comparison between the result and the reference text associated with each evaluation test sample. The accuracy metric may be obtained by any suitable automatic evaluation tool, such as WER, BLEU, chrF, or a combination thereof, that provides a comparison between the result and the reference text. The accuracy metric may be calculated by the computing device 102 itself (e.g. by executing computer program code to calculate the accuracy metric), and/or the computing device 102 may provide the results and the reference texts to a separate computing device or processor (not shown), which may calculate the accuracy metric and provide the accuracy metric to the computing device 102 illustrated in Figure 1.

The computing device 102 may obtain a latency value associated with each result. The latency value corresponds to a time between the providing of an evaluation test sample to a speech recognition system 106, and the receipt of the result from the speech recognition system 106. The latency value may be calculated by any suitable method. For example, the latency value may be calculated as the difference in time between the providing (to the speech recognition system 106) of the last sound in the evaluation test sample, and the receipt (from the speech recognition system 106) of the last word in the result. The latency value may be calculated by the computing device 102 itself (e.g. by executing computer program code to calculate the latency value), and/or the latency value may be calculated by a separate computing device or processor (not shown), which may provide the latency value to the computing device 102 illustrated in Figure 1.

The latency value may comprise a mean and/or a peak latency value for a given evaluation test sample.

In some examples, the computing device 102 may receive a requested latency (e.g. specified by a user), and obtain a difference between the requested latency and the obtained latency. The computing device 102 may further output the difference between the requested latency and the obtained latency.

It will be understood that a test sample, in general, has a finite duration (i.e. a test sample may comprise an audio file having a duration, or runtime), having a beginning and an end. Providing an evaluation test sample to a speech recognition system may comprise, e.g., streaming the evaluation test sample to the speech recognition system, and it may be possible to divide the evaluation test sample into segments corresponding to time intervals, each segment having its own beginning and end. Such segmentation may be performed by the speech recognition system. The result from each speech recognition system may comprise one or more result segments (for example, pieces of machine transcribed and/or machine translated text), each result segment corresponding to a segment of the evaluation test sample.

In some examples, segments of an evaluation test sample may correspond to individual words. In some examples, a segment of an evaluation test sample may include multiple words.

Merely as an example, a latency value, for a given segment of an evaluation test sample in the evaluation test set, may be calculated according to the following method:
obtaining a first time at which a segment of the evaluation test sample begins to be provided to the speech recognition system;
obtaining a second time at which the segment of the evaluation test sample is finished being provided to the speech recognition system;
obtaining a third time at which a result segment is received from the speech recognition system, the result segment corresponding to the segment of the evaluation test sample; and
determining a latency value for the result segment, the latency value for the result segment corresponding to a time difference between the first time and the third time, and/or between the second time and the third time.

It will be understood that the example method described above may provide a plurality of latency values per evaluation test sample (i.e. a latency value for each segment of the evaluation test sample). A latency value for the evaluation test sample as a whole may, in some examples, be calculated as a mean and/or a peak (e.g. maximum) latency value of the plurality of latency values. In some examples, a distribution of latency values may be determined.

The computing device 102 outputs an evaluation metric 112 for each speech recognition system 106. The evaluation metric 112 may comprise the accuracy metric for the result received from the speech recognition system 106, and/or the latency value associated with the result received from the speech recognition system 106. The evaluation metric 112 may be obtained from a combination of the accuracy metric and the latency value. Since there may be a trade-off between accuracy and latency that needs to be considered for a particular application of the speech recognition system(s) 106 undergoing evaluation, in some examples the speech recognition systems may be ranked according to accuracy, and the ranking may be subsequently modified according to the latency of each speech recognition system 106, or vice versa, and the evaluation metric 112 may reflect the modified ranking.

The evaluation metric 112 may be transmitted to a user interface (e.g. a GUI), e.g. displayed to the user on a screen or other suitable display device. The evaluation metric 112 may be transmitted to a memory, e.g. stored in a database, for future reference or comparison to the results of previous tests.

The evaluation criteria 110 may be stored in a memory, e.g. a storage device 108, to be recalled, or retrieved, for a subsequent test. The retrieved evaluation criteria, from the memory, may be modified by a user prior to running the subsequent test.

It will be appreciated that the storage devices 104, 108 illustrated in Figure 1 may represent any number of storage devices. For example, a single storage device, or any number of individual storage devices. In some examples, the storage devices 104, 108, may represent cloud storage (i.e. storage that is accessed via a network). The storage devices 104, 108 may be a permanent memory, such as ROM. The storage devices 104, 108 may alternatively be a temporary memory, such as RAM.

The computing device 102 may be a processor. The system 100 may be a computer (e.g. a personal computer) and the storage device(s) 104, 108 may be local storage devices to the computer, and/or network storage devices (storage devices that are accessed via a network). The computing device 102 may be a processor of a personal computer. Alternatively, the computing device 102 may be a processor of a centralised computing system, such as a server, that is accessed via a user terminal. In some examples, the computing device 102 may comprise distributed processing units that may be distributed across two or more user terminals. Each processing unit of the distributed processing units may comprise one or more CPUs referred to herein. The user terminal may be, for example, a mobile phone, a personal digital assistant ("PDA"), a personal computer ("PC") (including, for example, Windows^{™}, Mac OS^{™} and Linux^{™} PCs), a gaming device or other embedded device able to communicate with the centralised computing system, e.g. over a network. The network may be any suitable network which has the ability to provide a communication channel between the user terminal centralised computing system. For example, the network may be the Internet or another type of network such as a High data rate mobile network, such as a 3rd generation ("3G"), 4th generation ("4G"), or 5th generation ("5G") mobile network.

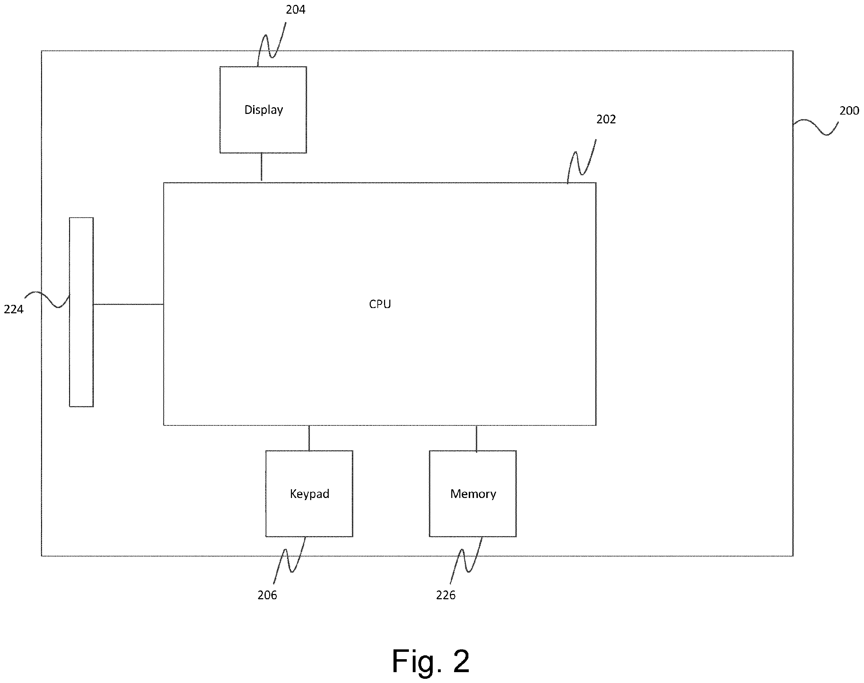

Figure 2 schematically illustrates a detailed view of an example of a device 200, which may be used to provide the evaluation criteria 110 according to the present disclosure. The device 200 may be, e.g., a personal computer, or a user terminal as described herein. The device 200 comprises a CPU 202. It will be understood that, where the device 200 is a personal computer or other individual computing device and where the CPU 202 is intended to carry out the computer implemented method described herein, the CPU 202 corresponds to the computing device 102 of Figure 1. Where the device 200 is a user terminal, the computing device 102 of Figure 1 corresponds to a processor of a centralised computing system.

The CPU 202 is connected to a display 204 such as a screen or touch screen which may display the user interface that is referred to herein. The CPU 202 is connected to an input device such as a keypad 206 or touch screen (the display 204 also acts as the input device), and/or an audio input device such as a microphone. In some examples, the display 204 and input device, may be integrated into the device 200. In alternative examples one or both of the input device and the display 204 may not be integrated into the device 200 and may be connected to the CPU 202 via respective interfaces. One example of such an interface is a USB interface. The CPU 202 is connected to a network interface 224 such as a modem for communication with the network 106. The network interface 224 may be integrated into the device 200 as shown in Figure 2. In alternative devices 200 the network interface 224 is not integrated into the device 200. The device 200 also comprises a memory 226 for storing data as is known in the art. The memory 226 may be a permanent memory, such as ROM. The memory 226 may alternatively be a temporary memory, such as RAM.

Methods according to the present disclosure may be carried out, for example, by a user terminal, and/or by a network entity on a network (e.g. a server).

Alternatively, or in addition, methods according to the present disclosure may be carried out, for example, by executing computer program code stored on, or accessible to (e.g. cloud-based software) the device 200.

Figure 3 illustrates an example of a method 300 for evaluating one or more speech recognition systems according to the present disclosure. For example, the method 300 may be performed by the computing device 102 of the system 100 illustrated in Figure 1.

At step S302, the computing device 102 receives one or more evaluation criteria. Evaluation criteria may be provided to the computing device 102 via one or more input devices such as the keypad 206 illustrated in Figure 2.

At step S304, the computing device 102 retrieves, from a sample repository, an evaluation set corresponding to the evaluation criteria. As described above, the sample repository is stored in a storage device 104. The storage device 104 may correspond to the memory 226 of the device 200 illustrated in Figure 2, and/or the storage device 104 may be accessed via a network interface such as the network interface 224 illustrated in Figure 2.

At step S306, the computing device 102 provides the evaluation test sample to one or more speech recognition systems 106. The speech recognition systems 106 may be configured to run locally as software on the computing device 102, and/or the speech recognition systems 106 may be configured to run on a separate system that may be communicated to via a network interface such as the network interface 224 illustrated in Figure 2.

At step S308, the computing device 102 receives, from each speech recognition system, a result comprising text in the target language for the evaluation test sample.

At step S310, the computing device 102 may obtain an accuracy metric and/or a latency value for each result. The accuracy metric and/or latency value may be obtained from software running locally on the computing device, and/or from a separate system that may be accessed via a network interface.

At step S312, the computing device 102 outputs an evaluation metric for each speech recognition system. The evaluation metric may be transmitted to a display device, e.g. the display device 204 illustrated in Figure 2. Alternatively, or in addition, the evaluation metric may be transmitted to a database which may be stored in a memory, e.g. a local memory such as the memory 226 illustrated in Figure 2, and/or a memory accessed via a network interface. In some examples, the computing device 102 may be configured to transmit the evaluation metric to a notification system. For example, the computing device 102 may be connected to an email server (e.g. via a network interface), and an email may be sent to a user to notify the user of the evaluation metric.

In some examples, the speech recognition systems may comprise speech-to-translated text (S3T) machine translation systems. In some examples, the speech recognition systems may comprise cascading machine translation systems, where test samples (i.e. audio files) are first provided to one or more ASR systems, and then the output text (in the source language) of each ASR system is then provided to one or more text-to-text machine translation systems. It will be understood that, in the case of cascading machine translation systems, a latency value generally corresponds to a total latency of the ASR system and of the text-to-text machine translation system.

Generally, any of the functions described herein can be implemented using software, firmware, hardware (e.g., fixed logic circuitry), or a combination of these implementations. The features of the techniques described herein are platform-independent, meaning that the techniques may be implemented on a variety of commercial computing platforms having a variety of processors.

Although the disclosure has been described in terms of preferred embodiments as set forth above, it should be understood that these embodiments are illustrative only and that the claims are not limited to those embodiments. Those skilled in the art will be able to make modifications and alternatives in view of the disclosure, which are contemplated as falling within the scope of the appended claims. Each feature disclosed or illustrated in the present specification may be incorporated in any embodiments, whether alone or in any appropriate combination with any other feature disclosed or illustrated herein.

## Claims

1. A computer implemented method for evaluating one or more speech recognition systems, the computer implemented method comprising:
receiving one or more evaluation criteria;
retrieving, from a sample repository, an evaluation set corresponding to the evaluation criteria, wherein the sample repository comprises:
one or more test samples, each test sample comprising audio in a source language; and
reference text for each test sample, the reference text being in a target language and corresponding to the audio of the respective test sample;
wherein the evaluation set comprises an evaluation test sample from the one or more test samples;
providing the evaluation test sample to one or more speech recognition systems;
receiving, from each speech recognition system, a result comprising text in the target language for the evaluation test sample, the result corresponding to the audio of the evaluation test sample;
obtaining an accuracy metric for each result, wherein each accuracy metric is indicative of an accuracy of the result relative to the reference text associated with the evaluation test sample; and
outputting an evaluation metric for each speech recognition system, each evaluation metric comprising the accuracy metric for the result received from the speech recognition system.

2. A computer implemented method according to claim 1, further comprising obtaining a latency value associated with each result, wherein each evaluation metric further comprises the latency value associated with the result received from the speech recognition system.

3. A computer implemented method according to claim 1 or 2, further comprising selecting a speech recognition system based on the evaluation metric.

4. A computer implemented method according to any one of the preceding claims, wherein receiving the evaluation criteria comprises receiving evaluation criteria via a user interface.

5. A computer implemented method according to any one of the preceding claims, further comprising transmitting the evaluation criteria to a memory.

6. A computer implemented method according to any one of the preceding claims, wherein receiving the evaluation criteria comprises retrieving the evaluation criteria from a memory.

7. A computer implemented method according to claim 6, further comprising receiving, via a user interface, a modification to the evaluation criteria retrieved from the memory.

8. A computer implemented method according to any one of the preceding claims, wherein outputting the evaluation metric comprises transmitting the evaluation metric to a user interface.

9. A computer implemented method according to any one of the preceding claims, wherein outputting the evaluation metric comprises transmitting the evaluation metric to a database.

10. A computer implemented method according to any one of the preceding claims, wherein outputting the evaluation metric comprises transmitting the evaluation metric to a notification system.

11. A computer implemented method according to any one of the preceding claims, further comprising comparing the evaluation metric to a previously obtained evaluation metric, and outputting a result of the comparison.

12. A device comprising a processor, the processor configured to carry out the computer implemented method according to any one of the preceding claims.

13. A device according to claim 12, the device further comprising a display, wherein outputting the evaluation metric comprises transmitting the evaluation metric to the display.

14. A non-transitory computer readable medium comprising instructions which, when executed by a processor of a computing device, cause the computing device to carry out the computer implemented method according to any one of claims 1 to 11.

15. A computer program comprising instructions which, when the program is executed by a computer, cause the computer to carry out the computer implemented method according to any one of claims 1 to 11.
